# EUROPÄISCHE PATENTSCHRIFT

(11) **EP 3 521 777 B1**
(45) Veröffentlichungstag und Bekanntmachung des Hinweises auf die Patenterteilung: **19.05.2021**
(21) Anmeldenummer: 18155432.0
(22) Anmeldetag: 06.02.2018
(51) Int. Cl.: G01F 23/26

(54) **IMPEDANZSENSOR UND VERFAHREN ZU DESSEN BETRIEB**
IMPEDANCE SENSOR AND METHOD FOR ITS OPERATION
CAPTEUR D'IMPÉDANCE ET SON PROCÉDÉ DE FONCTIONNEMENT

(43) Veröffentlichungstag der Anmeldung: 07.08.2019
(73) Patentinhaber: VEGA Grieshaber KG, 77709 Wolfach (DE)
(72) Erfinder: Weinzierle, Christian, 77709 Wolfach-Kirnbach (DE); Haas, Jürgen, 77709 Oberwolfach (DE)
(74) Vertreter: Patentanwälte Bauer Vorberg Kayser

(56) Entgegenhaltungen:
- WO-A1-2013/167384
- DE-A1-102013 107 120
- US-A- 4 164 146
- US-A- 4 434 657
- US-A1- 2017 059 386

## Beschreibung

Die vorliegende Erfindung betrifft einen Impedanzsensor gemäß dem Oberbegriff des Patentanspruchs 1 sowie ein Verfahren gemäß dem Oberbegriff des Patentanspruchs 10.

Impedanzsensoren dieser Art sind aus dem Stand der Technik, bspw. zur Messung von Grenz- oder Füllständen bekannt. Typische Anwendungen für die Erfassung einer vordefinierten Füllhöhe sind Prozessbehältnisse, wie beispielsweise Prozesstanks, Lagertanks, Silos oder Rohrleitungen in der Prozessindustrie. Impedanzsensoren werden dabei häufig als sog. Grenzschalter, d.h. zur Bestimmung, ob ein Füllmedium eine bestimmte Füllhöhe, den sog. Grenzstand, über- oder unterschreitet, in unterschiedlichen Flüssigkeiten, sowie granulierten und pulverförmigen Schüttgütern eingesetzt.

Es sind auch andere Arten von Grenzschaltern bekannt, die je nach Einsatzgebiet, Prozessbedingungen und Eigenschaften des Füllmediums ausgewählt werden. Neben Impedanzsensoren kommen Sensoren, die nach dem TDR (Time Domain Reflectomety) Prinzip arbeiten, oder Vibrationsgrenzstandsensoren oder kapazitiv arbeitende Sensoren zum Einsatz. Ein Schaltbefehl des Grenzschalters kann beispielsweise Befülleinrichtungen oder Entleereinrichtungen starten oder stoppen um entsprechend ein Überlaufen oder Leerlaufen des jeweiligen Prozessbehältnisses zu vermeiden.

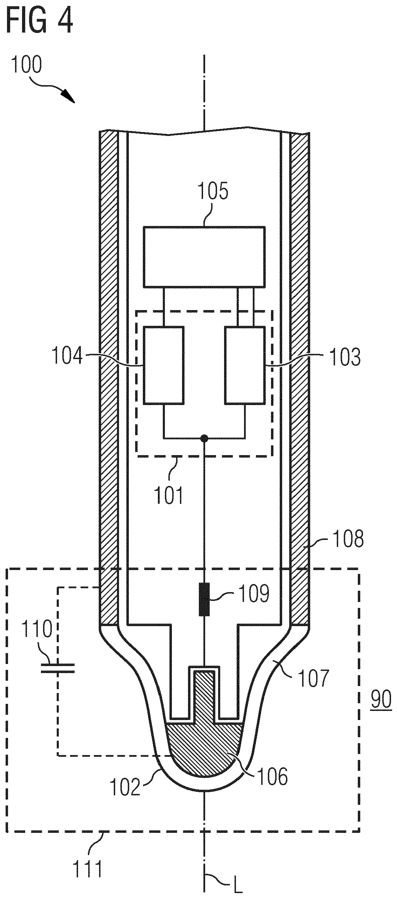

Ein bekannter Impedanzsensor 100 ist in Figur 4 gezeigt.

Figur 4 zeigt ein vereinfachtes Blockschaltbild eines Impedanzsensors 100 gemäß dem Stand der Technik. Im Wesentlichen besteht der Impedanzsensor 100, nachfolgend auch Grenzstandsensor oder Grenzstandmelder genannt, gemäß dem Stand der Technik aus einer Elektronikeinheit 101 und einer Messsonde 102. Die Messsonde 102, ist im vorliegenden Ausführungsbeispiel als Serienschwingkreis ausgebildet. Zwischen einer Messelektrode 106 und einer Bezugselektrode 108 bildet sich eine Messkapazität 110 aus, welche mit einer diskreten Induktivität 109 zu dem als Serienschwingkreis ausgebildeten Messschwingkreis verschaltet ist.

Die Messelektrode 106 ist rotationssymmetrisch zu einer Längsachse L des Impedanzsensors 100 ausgebildet und über eine Isolierung 107 von einem Prozessraum 90 getrennt. Vorteilhafterweise wird die diskrete Induktivität 109 so gewählt, dass sich eine Resonanzfrequenz fres des Schwingkreises für unterschiedlichste Medien bzw. Bedeckungszustände (leer, voll und verschmutzt) zwischen 100 MHz und 200 MHz einstellt.

Ein Betrag einer sich über die Frequenz ändernden komplexwertigen Impedanz |Z| dieses Messschwingkreises wird vorteilhafterweise zwischen 100 MHz und 200 MHz analysiert, d.h. der Messschwingkreis wird mittels eines Frequenzgenerators 103 mit einem Frequenzsweep mit Frequenzen zwischen 100 MHz und 200 MHz angeregt und ein Antwortsignal (Frequenzantwort) des Messschwingkreises mit einem Frequenzdetektor 104 detektiert. Befindet sich ein Medium im Bereich der Messsonde 102, ändert sich das Impedanzverhalten des Messschwingkreises, d.h. insbesondere verschiebt sich dessen Resonanzfrequenz fres, an der sich ein Minimum der Impedanz ausbildet.

Unter einem Frequenzsweep wird die sequenzielle Anregung mit einer Mehrzahl von aufeinander folgenden Frequenzen innerhalb eines Frequenzbereichs verstanden, wobei der Frequenzbereich idealerweise sämtliche möglichen Resonanzfrequenzen des Messschwingkreises enthalten sollte.

Die Änderung der Impedanz des Messschwingkreises wird für eine Auswertung in einer Auswerte- und Steuereinheit 105 herangezogen. Konkret wird die Frequenzantwort hinsichtlich einer Frequenzänderung Δf und einer Änderung der Amplitude eines Minimums der Impedanz ΔZ, auch als Amplitudenänderung bezeichnet, ausgewertet und daraus ein Schaltbefehl generiert.

Die Impedanzsensoren gemäß dem Stand der Technik werden bei Prozesstemperaturen zwischen -40°C und +115°C eingesetzt. Diese Temperaturunterschiede haben einen starken Einfluss auf das Verhalten des Frequenzgenerators 103 und des Frequenzdetektors 104, sodass es zu Messfehlern und damit zu falschen Schaltbefehlen kommen kann. Dies wird als Nachteil des Standes der Technik empfunden.

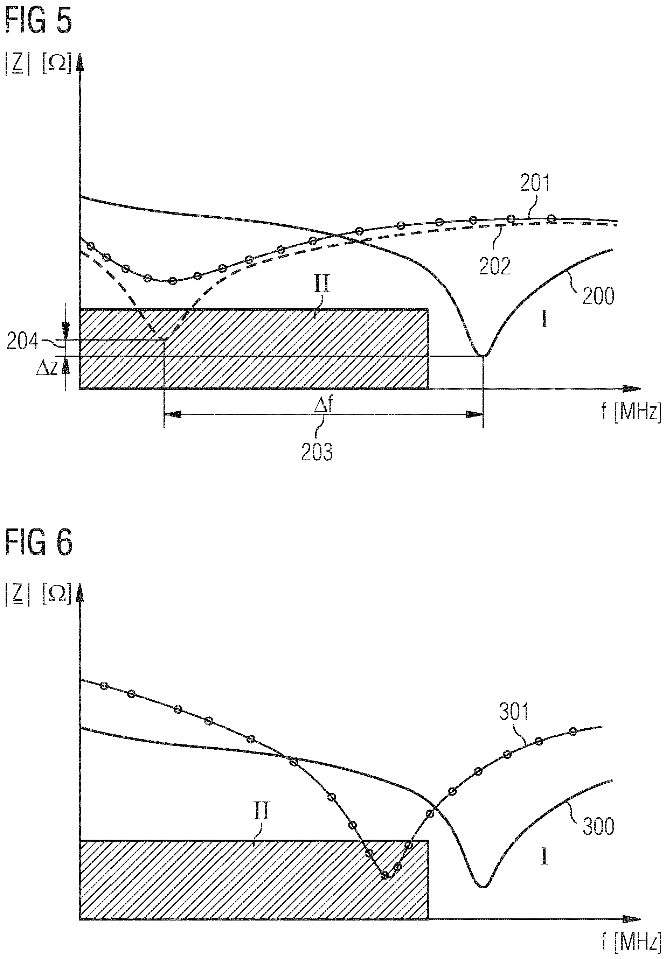

In Figur 5 sind beispielhaft für das Medium Ketchup die Frequenzantworten des Impedanzsensors 100 nach dem Stand der Technik aufgeführt.

Die Kurve 200 zeigt das Resonanzverhalten einer sauberen Messsonde 102. Dargestellt ist der Betrag der Impedanz Z über der Frequenz f.

Das Verhalten einer mit Anhaftungen von Ketchup verschmutzten Messsonde 102 ist in Kurve 201 und das einer komplett mit Ketchup bedeckten Messsonde 102 in Kurve 202 gezeigt.

Schaltbefehle (leer, voll) werden von der Auswerte- und Steuereinheit 105 realisiert, wobei gemäß dem Stand der Technik ausschließlich die Minima der Resonanzkurven für die Auswertung herangezogen werden. Diese werden bezüglich einer Frequenzänderung Δf und Amplitudenänderung ΔZ ausgewertet. Befindet sich das Minimum der Resonanzkurve im Bereich I, so gibt die Auswerte- und Steuereinheit 105 den Schaltbefehl "leer" aus. Befindet sich das Minimum jedoch im Bereich II so wird der Schaltbefehl "voll" ausgegeben. Die beiden definierten Schaltbereiche I, II können ab Werk fest in den Impedanzsensor 100 einprogrammiert oder durch einen Kundenabgleich eingestellt und verändert werden. Idealerweise sollten die Bereiche so definiert werden, dass für möglichst viele unterschiedliche Medien die Standardeinstellungen ausreichend sind, da ein kundenseitiger Abgleich zeitaufwendig und daher unerwünscht ist.

Aufgrund der Prozesstemperaturen zwischen -40°C und +115°C ist auch die Elektronikeinheit 101 des Impedanzsensors 100 relativ hohen Temperaturschwankungen ausgesetzt.

In Figur 6 sind zwei Resonanzkurven des Impedanzsensors 100 in unbedecktem Zustand der Messsonde 102 dargestellt, wobei die Kurve 300 das Verhalten bei +25°C und die Kurve 301 das Verhalten bei +115°C beschreiben. Wie aus Figur 6 ersichtlich ist, liegt das Minimum der Kurve 300 bei 25°C in Bereich I und das Minimum der Kurve 301 bei 115°C in Bereich II, was trotz identischem Füllstand, d.h. unbedecktem Sensor, unterschiedlichen Schaltzuständen des Impedanzsensors 100 entspricht. Grund für diese Vrschiebung ist eine Temperaturabhängigkeit der Elektronikeinheit 101. Durch Temperatureinflüsse kann es damit zu falschen Schaltentscheidungen des Grenzstandsensors 100 kommen.

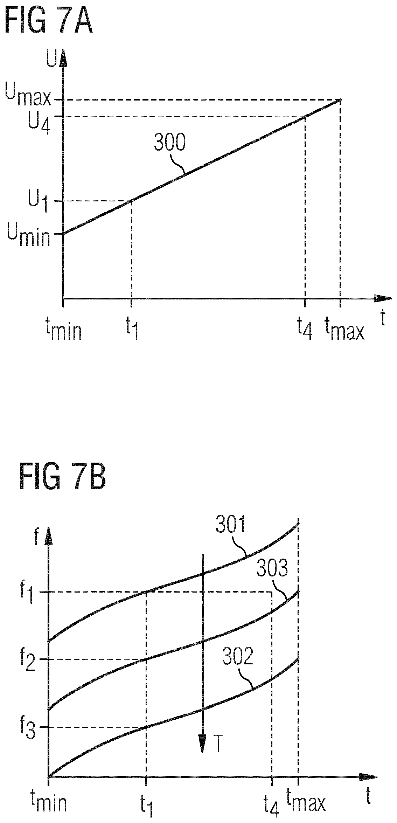

Ein ausgeprägtes Temperaturverhalten besitzt insbesondere der Signalgenerator 103. Dies ist in den Figuren 7a und 7b dargestellt. Im Stand der Technik ist der Signalgenerator 103 als spannungsgesteuerter Oszillator ausgeführt. Dem spannungsgesteuerten Oszillator wird die in Figur 7a gezeigte linear zwischen einer Minimalspannung Umin und einer Maximalspannung Umax verlaufende analoge Spannungsrampe 300 aus einem R-C-Glied als Eingangssignal zugeführt. Am Ausgang sollte unter idealen Umständen eine linear verlaufende Frequenzrampe abgreifbar sein, bei der jedem Spannungswert des Eingangssignals 300 eine eindeutige Frequenz f des Ausgangssignals zugeordnet werden kann. Durch Temperatureinflüsse und ein nichtlineares Verhalten des spannungsgesteuerten Oszillators ist das jedoch nicht der Fall.

In Figur 7b sind die Ausgangskennlinien des spannungsgesteuerten Oszillators bei drei unterschiedlichen Temperaturen T dargestellt, wie sie bei einer Spannungsrampe 300 gemäß Figur 7a als Eingangssignal auftreten. Die Ausgangskennlinie 301 beschreibt beispielsweise das Verhalten bei sehr niedrigen und die Kennlinie 302 bei sehr hohen Temperaturen, d.h. vorliegend bei -40°C und +100°C. Bei Raumtemperatur ist mit der Kennlinie 303 zu rechnen.

Bei einem Spannungswert U1, der bei der Spannungsrampe 300 zum Zeitpunkt t1 auftritt können temperaturabhängig verschiedene Frequenzen f auftreten. Für die in Figur 7b gezeigten Temperaturen sind die Frequenzen f1, f2 und f3 für ein und dieselbe Eingangsspannung möglich. Umgekehrt kann die Frequenz f1 sowohl durch eine Anregung mit der zum Zeitpunkt t1 anliegenden Spannung U1 oder einer zu einem Zeitpunkt t4 anliegenden Spannung U4 erzeugt worden sein. Wie aus Figur 7b ersichtlich, ist es aufgrund der Temperaturabhängigkeit und der Nichtlinearität des Signalgenerators 103 nicht mehr eindeutig, bei welcher Spannung U des Eingangssignals eine bestimmte Frequenz f des Ausgangssignals erreicht wird und umgekehrt. Dies kann in der Praxis zu erheblichen Messfehlern führen.

Weiterer Stand der Technik ist aus der DE 10 2013 107 120 A1, der US 4,164,146 A sowie der US 4,434,657 A bekannt.

Hier setzt die vorliegende Erfindung an.

Ein erfindungsgemäßer Impedanzsensor weist eine Messsonde, die durch ein die Messsonde umgebendes Medium in einer Kapazität beeinflussbar ist, einen Messschwingkreis, in dem die Messsonde als kapazitätsbestimmendes Element angeordnet ist, eine Elektronikeinheit mit einem Signalgenerator zur Anregung des Messschwingkreises und einen Signaldetektor zur Ermittlung eins Antwortsignals des Messschwingkreises und eine Signalverarbeitungseinheit, die mit der Elektronikeinheit verbunden ist, auf, wobei der Signalgenerator als digital ansteuerbare Schaltung ausgebildet ist.

Durch eine Ausgestaltung des Signalgenerators als digital ansteuerbare Schaltung ist es auf einfache Art und Weise möglich, dem Signalgenerator angepasste und annhähernd beliebig ausgestaltetete Eingangssignalen zuzuführen. Es ist damit möglich, das Eingangssignal des Signalgenerators so anzupassen, dass bspw. trotzt Nichtlinearitäten und/oder Temperaturabhängigkeiten des Signalgenerators eine linear verlaufende Frequenzrampe am Ausgang des Signalgenerators erreicht wird.

Unter einem als digital ansteuerbare Schaltung ausgestalteten Signalgenerator gemäß der vorliegendne Anmeldung soll die Schaltungsanordung zur Erzeugung der Eingangssignale für den Messschwingkreis verstanden werden, die mit digitalen Signalen angesteuert wird. Es kann insbesondere auch eine digital-analog-Wandlung der Signale stattfinden. Ausschlaggebend ist, dass eine digitale Ansteuerung erfolgt, die dann angepasste Spannungsverläufe ermöglicht.

Der als digital ansteuerbare Schaltung ausgebildete Signalgenerator kann bspw. als eine Reihenschaltung aus einem Digital-Analog-Wandler und einerm spannungsgesteuerten Oszillator ausgebildet sein. Es kann eine Digital-Analog-Wandlung aber auch bereits am Ausgang eines Controllers erfolgen, der dann den spannungsgesteuerten Oszillator ansteuert.

Alternativ kann das Eingangssignal so angepasst sein, dass auch weitere Temperaturabhängigkeiten der Elektronikeinheit und der Messsonde ausgeglichen werden können.

In einer einfachen Ausgestaltung kann eine Ansteuerung des Signalgenerators temperaturabhängig erfolgen, d.h. dass dem Signalgenerator abhängig von der herrschenden Umgebungstemperatur ein vorgegebenes oder ermittelbares Eingangssignal zugeführt wird, durch das eine Temperaturabhängigkeit des Ausgangssignals des Signalgenerators kompensiert wird. Unter Kompensation soll in diesem Fall auch verstanden werden, dass dem Signalgenerator ein derart angepasstes Eingangssignal zugeführt wird, dass ein Ausgangssignal erhalten wird, das mit einem Ausgangssignal übereinstimmt, das erhalten wird, wenn der Signalgenerator keinen Temperatureinflüssen ausgesetzt ist.

Eine Anpassung des Eingangssignals kann besonders einfach erfolgen, wenn der Impedanzsensore einen Temperatursensor aufweist, der vorzugsweise mit der Signalverarbeitungseinheit verbunden ist. Mit dem Temperatursensor kann auf einfache und kostengünstige Art und Weise eine Ermittlung der auf den Signalgenerator oder die Elektronikeinheit einwirkenden Temperatur erfolgen.

Idealerweise sollte der Temperatursensor in der Nähe des Signalgenerators positioniert werden. Dadurch kann sehr genau die Umgebungstemperatur des Signalgenerators ermittelt und dementsprechend auch eine genauere Kompensation realisiert werden. Je größer die Distanz zwischen Signalgenerator und Temperatursensor, desto größer kann auch der Temperaturunterschied zwischen diesen beiden Orten sein.

In der Praxis wird beispielsweise der Temperatursensor im Controller verwendet (aus Platz- und Kostengründen). Dieser befindet sich möglichst in der Nähe der zu kompensierenden Bauelemente.

In einer Ausgestaltungsform des vorliegenden Impedanzsensors weist dieser einen Speicher auf, in dem temperaturabhängige Ansteuerkurven für den Signalgenerator gespeichert sind. In dem Speicher sind also für eine Mehrzahl von unterschiedlichen Temperaturwerten die jeweils ermittelte Temperatur angepasste Verläufe des Eingangssignals des Signalgenerators hinterlegt, die diesem für ein optimiertes Messergebnis zugeführt werden.

Vorzugsweise sind solche Verläufe für das Eingangssignal für verschiedene Temperaturbereiche der gemessenen Temperatur hinterlegt. Versuche haben gezeigt, dass eine ausreichend genaue Kompensation erfolgt, wenn über den gesamten Betriebstemperaturenbereich von -40 °C bis +115 °C Verläufe des Eingangssignals in 5 °C Schritten hinterlegt sind.

Die Verläufe des Eingangssignals sind erfindungsgemäß so ausgelegt, dass bei Verwendung einer entsprechenden Ansteuerkurven der Spannungsgesteuerte Oszillator ein linear verlaufendes, insbesondere linear ansteigendes, Ausgangssignal aufweist.

Zusätzlich oder alternativ kann durch eine Referenzschaltung, mit der die Elektronikeinheit wechselweise zu dem Messschwingkreis verbindbar ist, eine Kompensation von Temperaturabhängigkeiten sämtlicher Komponenten der Elektronikeinheit, also insbesonder des Signalgenerators und des Signaldetektors erfolgen. Eine solche Kompensation kann bspw. dadurch erfolgen, dass ein Speicher vorgesehen ist, in dem ein Antwortsignal, insbesondere eine Frequenzantwort, der Referenzschaltung unter definierten Normalbedingungen und bei Anregung mit einer idealen Frequenzrampe abgelegt ist. Dieser Speicher kann vorzugsweise in der Signalverarbeitungseinheit angeordnet sein. Es kann somit die unter den vorhersschenden Messbedingungen ermittelte Frequenzantwort der Referenzschaltung mit der abgespeicherten Frequenzantwort verglichen und das Eingangssignal des Frequenzgenerators so verändert werden, dass die Frequenszantworten übereinstimmen. Anschließend kann das so veränderte Eingangssignl dem Messschwingkreis zugeführt und für die Messung verwendet werden.

In einer Weiterbildung ist der Signalgenerator als Schaltung zur direkten digitalen Synthese ausgebildet. Direkte digitale Synthese ist die Bezeichnung eines Verfahrens sowie integrierter Bausteine in der digitalen Signalverarbeitung zur Erzeugung periodischer, bandbegrenzter Signale mit praktisch beliebig feiner Frequenzauflösung. Die Schaltung zur direkten digitalen Synthese benötigt für die Umsetzung solcher Signale ein Steuerwort von der Auswerte- und Steuereinheit sowie ein Referenztaktsignal. Dieses kann beispielsweise von einem externen, temperaturstabielen Quarz realisiert und der Schaltung zur direkten digitalen Synthese zugeführt werden. Mit Hilfe dieser beiden Eingangsgrößen wird ein sehr temperaturstabiles, analoges Ausgangssignal generiert.

Ein erfindungsgemäßes Verfahren zum Betreiben eines Impedanzsensors mit einer Messsonde, die durch ein die Messsonde umgebendes Medium in einer Kapazität beeinflussbar ist, einem Messschwingkreis, in dem die Messsonde (102) als kapazitätsbestimmendes Element angeordnet ist, einer Elektronikeinheit mit einem Signalgenerator zur Anregung des Messschwingkreises und einem Signaldetektor zur Ermittlung eins Antwortsignals des Messschwingkreises und einer Signalverarbeitungseinheit, die mit der Elektronikeinheit verbunden ist, wobei der Signalgenerator als digital ansteuerbare Schaltung ausgebildet ist weist folgende Schritten auf:
- Durchführen einer Temperatur- und/oder Referenzmessung,
- Ansteuern des Signalgenerators mit einem an das Ergebnis der Temperatur- und/oder Referenzmessung angepassten Eingangssignal,
- Ermitteln einer Lage eines Amplitudenminimums eines Antwortsignals des Messschwingkreises und
- Ausgeben eines Messergebnisses, ob die Messsonde mit Messmedium bedeckt ist, oder nicht.

In einer Ausgestaltung des Verfahrens kann aufgrund der Temperaturmessung ein abgespeicherter Verlauf für das Eingangssignal ausgewählt und dem Signalgenerator zugeführt werden. Dieser Verfahrensablauf ist besonders einfach und kann daher ohne großen Aufwand implementiert werden.

Idealerweise ist der Verlauf des Eingangssignals so angepasst, dass das Ausgangssigal des Signalgenerators einen linearen Verlauf aufweist, d.h. dass insbesondere eine linear und mit konstanter Steigung verlaufende Frequenzrampe erzielt wird.

In einer Ausgestaltung des Verfahrens wird für die Referenzmessung der Signalgenerator ausgangsseitig mit einer Referenzschaltung verbunden, die Frequenzantwort der Referenzschaltung mit einer abgespeicherten Frequenzantwort verglichen, das Eingangssignal des Signalgenerators derart verändert, dass die Frequenzantwort der Referenzschaltung mit der abgespeicherten Frequenzantwort übereinstimmt und das so veränderten Eingangssignals als angepasstes Eingangssignal zur Anregung des Messschwingkreises verwendet.

Die vorliegende Erfindung wird nachfolgend anhand von Ausführungsbeispielen unter Bezugnahme auf die beigefügten Figuren eingehend erläutert. Es zeigen:
- Figur 1: ein erstes Ausführungsbeispiel eines digital ansteuerbaren Impedanzsensors,
- Figur 2: ein zweites Ausführungsbeispiel eines digital ansteuerbaren Impedanzssensors,
- Figur 3: ein Anwendungsbeispiel für einen Impedanzsensor gemäß der Figuren 1 oder 2,
- Figur 4: einen Impedanzsensor gemäß dem Stand der Technik (schon behandelt),
- Figur 5: Antwortsignale des Sensors gemäß Figur 4 bei unterschiedlicher Bedeckung des Sensors (schon behandelt),
- Figur 6: Antwortsignale des Sensors gemäß Figur 4 bei unterschiedlichen Temperaturen (schon behandelt),
- Figur 7a: ein Eingangssignnal für einen Signalgenerator gemäß dem Stand der Technik (schon behandelt) und
- Figur 7b: Ausgangssignale eines Signalgenerators gemäß dem Stand der Technik bei unterschiedlichen Temperaturen mit einem Eingangssignal gemäß Figur 7a (schon behandelt),

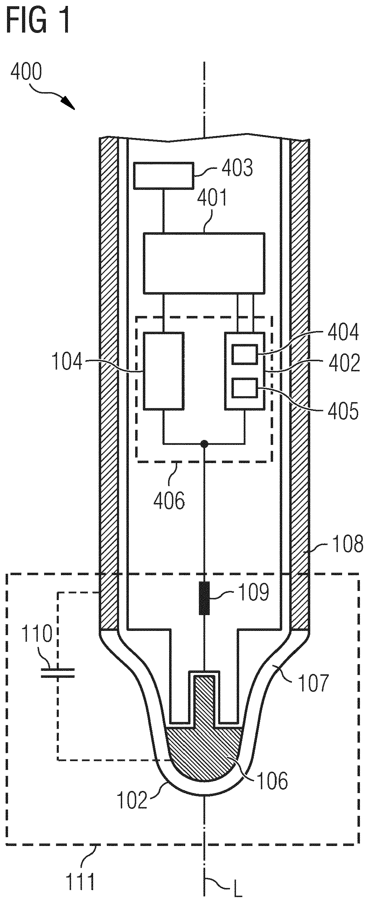

Figur 1 zeigt ein erstes Ausführungsbeispiel eines Impedanzgrenzschalters 400 gemäß der vorliegenden Anmeldung.

Im Wesentlichen besteht der Impedanzgrenzschalter 400 gemäß Figur 1 aus einer Auswerte- und Steuereinheit 401, einem mit der Auswerte- und Steuereinheit 401 verbundenen, digital ansteuerbaren Signalgenerator 402 sowie einem ebenfalls mit der Auswerte- und Steuereinheit 401 verbundenen Temperatursensor 403.

In diesem Ausführungsbeispiel besteht der Signalgenerator 402 aus einem Digital-Analog-Wandler 404 sowie einem dem A-D-Wandler 404 nachgeschalteten spannungsgesteuerten Oszillator 405. Eine digitale Ansteuerung und Taktung des Signalgenerators 402 übernimmt dabei die Auswerte- und Steuereinheit 401. Diese führt dem Digital-Analog-Wandler 404 ein digitales Ansteuersignal zu, welches von diesem in ein analoges Spannungssignal zur Ansteuerung des spannungsgesteuerten Oszillators 405 gewandelt wird. Der spannungsgesteuerte Oszillator 405 wiederum wandelt das analoge Spannungssignal in ein Frequenzsignal, das einem Messschwingkreis bestehend aus einer Messsonde 102 und einer diskreten Induktivität 109 zugeführt ist. Der Messschwingkreis ist im Wesentlichen aufgebaut und weist die gleiche Funktionalität auf, wie dies aus dem Stand der Technik bekannt ist. Es wird diesbezüglich auf die Beschreibung in Zusammenhang mit Figur 4 verwiesen.

In einem Speicher, der im vorliegenden Ausführungsbeispiel in der Auswerte- und Steuereinheit 401 angeordnet ist, sind digitale Ansteuersignale für den Signalgenerator hinterlegt. Diese Ansteuersignale beinhalten temperaturabhängige Korrekturparameter sowie Linearisierungswerte zur Kompensation eines Temperaturgangs des spannungsgesteuerten Oszillators 405, welche ab Werk definiert und fest in den Speicher einprogrammiert werden.

Durch Messen der aktuellen Temperatur am Einsatzort des Impedanzsensors 400 können die entsprechend hinterlegten digitalen Ansteuersignale aus dem Speicher entnommen und dem Signalgenerator 402 zugeführt werden. Durch diese Vorgehensweise wird am Ausgang des Signalgenerators 402 eine temperaturstabile, linearisierte Frequenzrampe realisiert und damit eine zuverlässige und sichere Grenzstandmessung ermöglicht. Ein so bereitgestellter Impedanzsensor bzw. Grenzstandmelder 400 ist über den gesamten zulässigen Temperaturbereich mit gleichbleibender Messgenauigkeit einsetzbar und zuverlässig.

Alternativ kann der digital ansteuerbare Signalgenerator 402 durch eine Schaltung zur direkten digitale Synthese (DDS) gebildet sein. In diesem Beispiel wird die digitale Ansteuerung mittels eines Steuerworts durch die Auswerte- und Steuereinheit 401 realisiert. Das Steuerwort beinhaltet Informationen über das zu generierende analoge Ausgabesignal. Die Taktung der DDS wird durch einen externen, temperaturstabilen Quarz realisiert. Mit Hilfe dieser beiden Eingangsgrößen der DDS werden die Ausgangsfrequenzen generiert. Der Impedanzgrenzschalter 400 weist ebenfalls einen Speicher und einen Temperatursensor 503 auf, sodass wie in Bezug auf Figur 1 beschrieben eine temperaturgesteuerte Ansteuerung des Signalgenerators 402 erfolgen kann. Im Unterschied zu der Ausgestaltung gemäß Figur 1 hat eine DDS den Vorteil, dass diese sehr temperaturstabil arbeitet und dementsprechend die Temperaturabhängigkeit des Signalgenerators reduziert wird.

In einer alternativen Ausgestaltungsform kann der digitale ansteuerbare Signalgenerator 402 ferner als Phasenregelschleife ausgebildet sein. Die übrige Beschaltung kann unverändert bleiben.

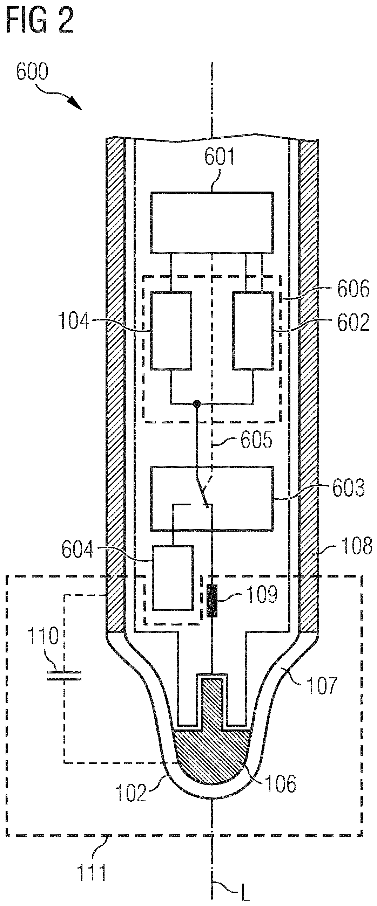

In Figur 2 ist ein weiteres Ausführungsbeispiel eines Impedanzgrenzschalter 600 gemäß der vorliegenden Anmeldung dargestellt.

Der Impedanzgrenzschalter 600 weist eine Auswerte- und Steuereinheit 601, einen digital ansteuerbaren Signalgenerator 602, einen Umschalter 603 sowie eine Referenzschaltung 604 auf. In der Auswerte- und Steuereinheit 601 befindet sich ein Speicher, indem ab Werk das Impedanzverhalten der Referenzschaltung 604, das heißt insbesondere ein Antwortsignal der Referenzschaltung 604 bei Anregung mit einem vorbestimmten Signal, insbesondere einer vorbestimmten Frequenzrampe bzw. einem Frequenzsweep, abgelegt ist.

Mit Hilfe des Umschalters 603, der bspw. als HF-Umschalter realisiert sein kann, der Steuerleitung 605 und der Auswerteund Steuereinheit 601 kann die Elektronikeinheit 606 wechselweise mit der Referenzschaltung 604 oder dem Messschwingkreis verbunden, d.h. die Referenzschaltung 604 aktiviert und dementsprechend der Messschwingkreis deaktiviert werden. Nach der Aktivierung der Referenzschaltung 604 wird deren Frequenzantwort bzw. das Impedanzverhalten gemessen und mit der abgespeicherten Referenzkurve verglichen. Über die Auswerte- und Steuereinheit 601 wird das digitale Ansteuersignal für den Signalgenerator 602 solange verändert bzw. variiert, bis die gemessene Frequenzantwort und die abgespeicherte Referenzkurve übereinstimmen, oder im Rahmen einer vorgegebenen maximalen Abweichung liegen. Anschließend wird die Referenzschaltung 604 wieder deaktiviert und der Messschwingkreis aktiviert. Der Signalgenerator 602 wird nun mit dem entsprechend veränderten digitalen Ansteuersignal gespeist, sodass die Signalerzeugungseinheit 602 mit einem Signal gespeist wird, das sowohl den Temperaturgang der gesamten Elektronikeinheit 606 als auch eventuelle Nichtlinearitäten des Signalgenerators 602 und des Signaldetektors kompensiert.

Dieses Beispiel kann insbesondere für die Temperaturkompensation der gesamten Elektronikeinheit 606 verwendet werden. Ein entsprechendes Anpassen des digitalen Ansteuersignals kann mehrmals pro Minute/Sekunde oder vor jeder Messung stattfinden.

Im Stand der Technik wird der Messschwingkreis der Impedanzsensoren über deren gesamten Arbeitsbereich 703, d.h. im Bereich zwischen einer unteren Grenzfrequenz fmin bis zu einer oberen Grenzfrequenz fmax angeregt. Hierfür wird der Signalgenerator mit einer analogen Spannungsrampe beaufschlagt, die von einer Minimalspannung bis zu einer Maximalspannung kontinuierlich durchlaufen wird. Das ist nur so möglich, da die Spannungsrampe mittels eines R-C-Gliedes analog erzeugt wird und damit die Bereitstellung einzelner diskreter Spannungswerte nicht möglich ist.

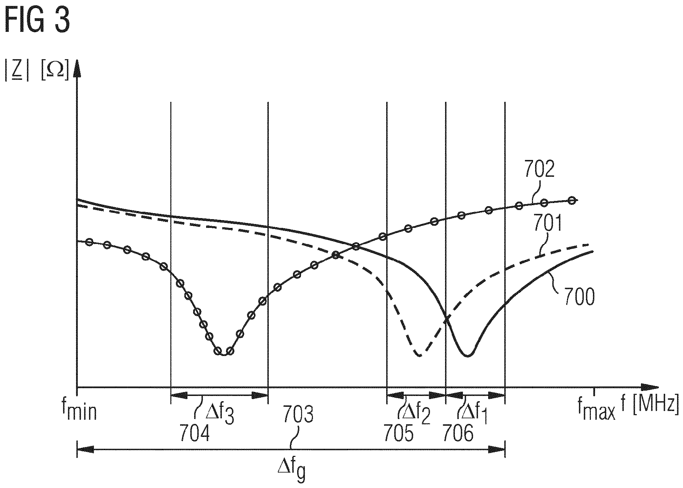

In Figur 3 ist ein Anwendungsbeispiel eines Impedanzsensors gemäß der vorliegenden Anmeldung gezeigt, das durch eine digitale Ansteuerung des Signalgenerators ermöglicht wird.

Mit einem digital ansteuerbaren Signalgenerator gemäß der vorliegenden Anmeldung ist es nun möglich, den Signalgenerator mit digitalen Signalen auf diskreten Spannungswerten anzuregen und damit nur gewisse, kleinere Bereiche eines großen Frequenzbereiches 703 zu durchlaufen bzw. zu analysieren. Dadurch kann eine Messzeit und somit ein Energiebedarf des Impedanzgrenzschalters deutlich reduziert werden.

In Figur 3 sind beispielhaft drei unterschiedliche Frequenzantworten einer Messsonde102 dargestellt. Eine saubere und somit unbedeckte Messsonde 102 verursacht das Resonanzverhalten 700. Das Resonanzverhalten einer komplett mit Öl bedeckte Messsonde 102 ist in Kurve 701 dargestellt. Kurve 702 beschreibt das Resonanzverhalten eine Messsonde 102, welche komplett mit Wasser umgeben ist.

Ist dem Impedanzgrenzschalter das Detektionsmedium bekannt, muss also nicht der gesamte Frequenzbereich 703 untersucht werden, sondern es ist ausreichend, nur die Frequenzbereiche zu analysieren, in denen die Resonanzfrequenz erwartet wird.

Bei wässrigen Lösungen ist es damit beispielsweise ausreichend Bereich 704 und bei ölbasierten Medien Bereich 705 zu untersuchen. Der Signalgenerator muss damit nur ein Frequenzsignal für diesen Bereich liefern. Befindet sich in dem jeweiligen Bereich 704 oder 705 das Minimum der Resonanzkurve, gibt der Grenzschalter den Zustand bedeckt aus. Ist kein Minimum im relevanten Bereich vorhanden, so wird anschließend der Bereich 706 analysiert. Befindet sich in diesem Bereich das Minimum der Resonanzkurve, wird der Zustand unbedeckt ausgegeben. Der Impedanzgrenzschalter kann durch eine Kundenparametrierung oder ab Werk auf das zu messende Medium eingestellt werden.

### Bezugszeichenliste

- 90: Prozessraum
- 100: Impedanzsensor
- 101: Elektronikeinheit
- 102: Messsonde
- 103: Frequenzgenerator
- 104: Signaldetektor
- 105: Steuereinheit
- 106: Messelektrode
- 107: Isolierung
- 108: Bezugselektrode
- 109: Induktivität
- 200: Kurve
- 201: Kurve
- 202: Kurve
- 300: Kurve
- 301: Kurve
- 400: Impedanzsensor
- 401: Auswerte- und Steuereinheit
- 403: Temperatursensor
- 404: Digital-Analog-Wandler
- 405: Oszillator
- 600: Impedanzgrenzschalter
- 601: Auswerte- und Steuereinheit
- 602: Signalgenerator
- 603: Umschalter
- 604: Referenzschaltung
- 700: Kurve
- 701: Kurve
- 702: Kurve
- 703: Frequenzbereich
- 704: Bereich
- 705: Bereich
- 706: Bereich
- f: Frequenz
- Δf: Frequenzänderung
- t: Zeitpunkt
- U: Spannung
- ΔZ: Amplitudenänderung
- Z: Impedanz
- Uₘᵢₙ: Minimalspannung
- Uₘₐₓ: Maximalspannung
- fₘᵢₙ: Grenzfrequenz
- fₘₐₓ: Grenzfrequenz
- f₁: erste Frequenz
- f₂: zweite Frequenz
- f₃: dritte Frequenz
- t₁: erster Zeitpunkt
- t₂: zweiter Zeitpunkt
- t₃: dritter Zeitpunkt
- t₄: vierter Zeitpunkt

## Patentansprüche

1. Impedanzsensor (400, 600) mit
- einer Messsonde (102), die durch ein die Messsonde (102) umgebendes Medium in einer Kapazität beeinflussbar ist,
- einem Messschwingkreis, in dem die Messsonde (102) als kapazitätsbestimmendes Element angeordnet ist,
- einer Elektronikeinheit (406, 606) mit einem Signalgenerator (402, 602) zur Anregung des Messschwingkreises und einem Signaldetektor (104) zur Ermittlung eines Antwortsignals des Messschwingkreises und
- einer Signalverarbeitungseinheit (401, 601), die mit der Elektronikeinheit (406, 606) verbunden ist, **dadurch gekennzeichnet, dass**
der Signalgenerator (402, 602) als digital ansteuerbare Schaltung ausgebildet ist, wobei der Signalgenerator (402, 602) einen spannungsgesteuerten Oszillator aufweist und Ansteuerkurven für den Signalgenerator (402, 602) so ausgelegt sind, dass der Signalgenerator (402, 602) eine linear verlaufende Frequenzrampe als Ausgangssignal aufweist.

2. Impedanzsensor (400, 600) gemäß Anspruch 1,
**dadurch gekennzeichnet, dass**
eine Ansteuerung des Signalgenerators (402, 602) temperaturabhängig erfolgt.

3. Impedanzsensor (400, 600) gemäß Anspruch 2,
**gekennzeichnet durch,**
einen Temperatursensor (403), der vorzugsweise mit der Signalverarbeitungseinheit (401) verbunden ist.

4. Impedanzsensor (400, 600) gemäß einem der vorhergehenden Ansprüche,
**gekennzeichnet durch,**
einen Speicher, in dem temperaturabhängige Ansteuerkurven für den Signalgenerator (402, 602) gespeichert sind.

5. Impedanzsensor (400, 600) gemäß einem der vorhergehenden Ansprüche,
**gekennzeichnet durch,**
eine Referenzschaltung (604), wobei die Elektronikeinheit (606) wechselweise mit dem Messschwingkreis oder der Referenzschaltung (604) verbindbar ist und
einen Speicher, in dem eine Frequenzantwort der Referenzschaltung (604) abgelegt ist.

6. Impedanzsensor (400, 600) gemäß einem der vorhergehenden Ansprüche,
**dadurch gekennzeichnet, dass** der Signalgenerator (602) als Schaltung zur direkten digitalen Synthese oder als Reihenschaltung aus einem Digital-Analog-Wandler und einem spannungsgesteuerten Oszillator ausgebildet ist.

7. Verfahren zum Betreiben eines Impedanzsensors (400, 600)gemäß einem der Patentansprüche 1 bis 6 , **gekennzeichnet durch** folgende Schritte:
- Durchführen einer Temperatur- und/oder Referenzmessung,
- Ansteuern des Signalgenerators (402, 602) mit einem an das Ergebnis der Temperatur- und/oder Referenzmessung angepassten Eingagnssignal, wobei aufgrund der Temperaturmessung ein abgespeicherter Verlauf für das Eingangssignal ausgewählt und dem Signalgenerator (402, 602) zugeführt wird, wobei der Verlauf des Eingangssignals so angepasst ist, dass das Ausgangssigal des Signalgenerators (402, 602) eine linear verlaufende Frequenzrampe ist,
- Ermitteln einer Lage eines Amplitudenminimums einer Frequenzantwort des Messschwingkreises und
- Ausgeben eines Messergebnisses, ob die Messsonde mit Messmedium bedeckt ist, oder nicht.

8. Verfahren gemäß Anspruch 7,
**dadurch gekennzeichnet, dass** für die Referenzmessung der Signalgenerator (402, 602) ausgangsseitig mit einer Referenzschaltung (604) verbunden wird,
die Frequenzantwort der Referenzschaltung (604) mit einer abgespeicherten Frequenzantwort verglichen wird,
das Eingangssignal des Signalgenerators (402, 602) derart verändert wird, dass die Frequenzantwort der Referenzschaltung (604) mit der abgespeicherten Frequenzantwort übereinstimmt und Verwenden des veränderten Eingangssignals als angepasstes Eingangssignal zur Anregung des Messschwingkreises.

## Claims

1. An impedance sensor (400, 600), comprising
- a measuring probe (102), which can be influenced in a capacity by a medium surrounding the measuring probe (102),
- a measuring oscillation circuit, in which the measuring probe (102) is arranged as capacity-determining element,
- an electronics unit (406, 606) comprising a signal generator (402, 602) for excitation of the measuring oscillation circuit, and a signal detector (104) for determining a response signal of the measuring oscillation circuit, and
- a signal processing unit (401, 601) connected to the electronics unit (406, 606)
**characterized in that**
the signal generator (402, 602) is designed as a digitally controllable circuit, wherein the signal generator (402, 602) has a voltage-controlled oscillator, and control curves for the signal generator (402, 602) are designed such that the signal generator (402, 602) has a linearly extending frequency ramp as output signal.

2. The impedance sensor (400, 600) according to claim 1,
**characterized in that**
a control of the signal generator (402, 602) takes place depending on the temperature.

3. The impedance sensor (400, 600) according to claim 2,
**characterized by**
a temperature sensor (403), which is preferably connected to the signal processing unit (401).

4. The impedance sensor (400, 600) according to any of the preceding claims,
**characterized by**
a memory, in which temperature-dependent control curves are saved for the signal generator (402, 602).

5. The impedance sensor (400, 600) according to any of the preceding claims,
**characterized by**
a reference circuit (604), wherein the electronics unit (606) can be connected alternately to the measuring oscillation circuit or the reference circuit (604), and
a memory in which a frequency response of the reference circuit (604) is stored.

6. The impedance sensor (400, 600) according to any of the preceding claims,
**characterized in that**
the signal generator (602) is designed as a circuit for the direct digital synthesis or as a series circuit from a digital-to-analog converter and a voltage-controlled oscillator.

7. Method for operating an impedance sensor (400, 600) according to any of patent claims 1 to 6, **characterized by** the following steps:
- performing a temperature and/or reference measurement,
- controlling the signal generator (402, 602) with an input signal adapted to the result of the temperature and/or reference measurement, wherein due to the temperature measurement, a saved curve for the input signal is selected and is fed to the signal generator (402, 602), wherein the curve of the input signal is adapted in such a way that the output signal of the signal generator (402, 602) is a linearly extending frequency ramp,
- determining a position of an amplitude minimum of a frequency response of the measuring oscillation circuit, and
- releasing a measuring result whether the measuring probe is or is not covered with measuring medium.

8. The method according to claim 7,
**characterized in that**,
for the reference measurement, the signal generator (402, 602) is connected on the output side to a reference circuit (604),
the frequency response of the reference circuit (604) is compared with a saved frequency response,
the input signal of the signal generator (402, 602) is changed such that the frequency response of the reference circuit (604) corresponds to the saved frequency response, and use of the changed input signal as an adjusted input signal to excite the measuring oscillation circuit.

## Revendications

1. Capteur d'impédance (400, 600) comprenant
- une sonde de mesure (102) qui peut être influencée en une capacité par un milieu entourant la sonde de mesure (102),
- un circuit résonant de mesure dans lequel la sonde de mesure (102) est agencée comme élément déterminant la capacité,
- une unité électronique (406, 606) ayant un générateur de signaux (402, 602) destiné à exciter le circuit résonant de mesure ainsi qu'un détecteur de signaux (104) destiné à déterminer un signal de réponse du circuit résonant de mesure, et
- unité de traitement de signaux (401, 601) qui est connectée à l'unité électronique (406, 606),
**caractérisé par le fait que**
le générateur de signaux (402, 602) est conçu en tant que circuit commandable de manière numérique, dans lequel le générateur de signaux (402, 602) comprend un oscillateur commandé en tension et des courbes de commande pour le générateur de signaux (402, 602) sont conçues de telle sorte que le générateur de signaux (402, 602) présente, en tant que signal de sortie, une rampe de fréquence s'étendant linéairement.

2. Capteur d'impédance (400, 600) selon la revendication 1,
**caractérisé par le fait qu'**
une commande du générateur de signaux (402, 602) se fait en fonction de la température.

3. Capteur d'impédance (400, 600) selon la revendication 2,
**caractérisé par**
un capteur de température (403) qui, de préférence, et connecté à l'unité de traitement de signaux (401).

4. Capteur d'impédance (400, 600) selon l'une quelconque des revendications précédentes,
**caractérisé par**
une mémoire dans laquelle sont stockées des courbes de commande en fonction de la température pour le générateur de signaux (402, 602).

5. Capteur d'impédance (400, 600) selon l'une quelconque des revendications précédentes,
**caractérisé par**
un circuit de référence (604), dans lequel l'unité électronique (606) peut être connectée en alternance au circuit résonant de mesure ou au circuit de référence (604), et
une mémoire dans laquelle est stockée une réponse en fréquence du circuit de référence (604).

6. Capteur d'impédance (400, 600) selon l'une quelconque des revendications précédentes,
**caractérisé par le fait que**
le générateur de signaux (602) est conçu en tant que circuit pour la synthèse numérique directe ou en tant que montage en série composé d'un convertisseur numérique-analogique et d'un oscillateur commandé en tension.

7. Procédé destiné à faire fonctionner un capteur d'impédance (400, 600) selon l'une quelconque des revendications 1 à 6, **caractérisé par** les étapes suivantes consistant à:
- effectuer une mesure de température et/ou de référence,
- commander le générateur de signaux (402, 602) avec un signal d'entrée adapté au résultat de la mesure de température et/ou de référence, dans lequel, en raison de la mesure de température, un tracé mémorisé pour le signal d'entrée est sélectionné et est fourni au générateur de signaux (402, 602), dans lequel le tracé du signal d'entrée est adapté de telle sorte que le signal de sortie du générateur de signaux (402, 602) est une rampe de fréquence s'étendant linéairement,
- déterminer une position d'un minimum d'amplitude d'une réponse en fréquence du circuit résonnant de mesure et
- fournir un résultat de mesure indiquant si la sonde de mesure est recouverte ou non de milieu de mesure.

8. Procédé selon la revendication 7,
**caractérisé par le fait que**,
pour la mesure de référence, le générateur de signaux (402, 602) est connecté côté sortie à un circuit de référence (604),
la réponse en fréquence du circuit de référence (604) est comparée à une réponse en fréquence mémorisée,
le signal d'entrée du générateur de signaux (402, 602) est modifié de telle sorte que la réponse en fréquence du circuit de référence (604) concorde avec la réponse en fréquence mémorisée, et le signal d'entrée modifié est utilisé en tant que signal d'entrée adapté pour exciter le circuit résonnant de mesure.
